(19) **Europäisches Patentamt**

**European Patent Office**

**Office européen des brevets**

(11) Veröffentlichungsnummer: **0 358 028 B1**

(12) **EUROPÄISCHE PATENTSCHRIFT**

(45) Veröffentlichungstag der Patentschrift: **10.11.93**

(21) Anmeldenummer: **89115388.4**

(22) Anmeldetag: **21.08.89**

(51) Int. Cl.⁵: **H04M 3/56**

(54) **Digitale Zeitmultiplex-Fernmeldevermittlungsanlage.**

(30) Priorität: **07.09.88 DE 3830409**

(43) Veröffentlichungstag der Anmeldung:
**14.03.90 Patentblatt 90/11**

(45) Bekanntmachung des Hinweises auf die
Patenterteilung:
**10.11.93 Patentblatt 93/45**

(84) Benannte Vertragsstaaten:
**AT BE CH DE ES FR GB GR IT LI NL SE**

(56) Entgegenhaltungen:
**EP-A- 0 033 933**
**EP-A- 0 163 307**
**DE-A- 3 246 051**
**GB-A- 1 409 610**

(73) Patentinhaber: **SIEMENS AKTIENGESELL-
SCHAFT**
**Wittelsbacherplatz 2**
**D-80333 München(DE)**

(72) Erfinder: **Nagler, Werner, Dipl.-Ing.**
**Waltrichstrasse 12**
**D-8021 Schäftlarn(DE)**
Erfinder: **Krumenacker, Rudolf, Dipl.-Ing.**
**Veit-Stoss-Strasse 50**
**D-8000 München 21(DE)**
Erfinder: **Kaderka, Rostislav, Dipl.-Ing.**
**Kurfürstenstrasse 20**
**D-8034 Germering(DE)**

## Beschreibung

Die Erfindung betrifft eine digitale Zeitmultiplex-Fernmeldevermittlungsstelle gemäß dem Oberbegriff des Patentanspruchs 1. Bei einer bekannten Zeitmultiplex-Fernmeldevermittlungsstelle dieser Art (EP-A-01 63 307) enthält die Konferenzeinheit einen Addierer, der jeweils zwei Summanden verarbeiten kann. Diese Konferenzeinheit arbeitet seriell, d.h. im Zuge der Abwicklung einer Konferenz werden zunächst aus zwei Konferenzanteilen nacheinander verschiedene Zwischensummen gebildet, die dann in auf den Zweigen der Rückführungsschleife, in der die Konferenzeinheit liegt, gebildeten Konferenzzeitfächern wieder an den Sprachspeicher der Vermittlungsstelle zurückgeschleift werden. Dort erfahren sie eine weitere Zeitkanalumsetzung in Konferenzzeitfächer, in denen sie wieder der Konferenzeinheit zugesendet werden. Dort wird ihnen ein weiterer Einzelkonferenzanteil eines Konferenzteilnehmers zuaddiert. In bisher noch nicht benutzten Konferenzzeitfächern gelangen diese Summensignale zum zweiten Mal an den Sprachspeicher. Sofern mehr als vier Konferenzteilnehmer an der Konferenz beteiligt sind, wiederholt sich die beschriebene Prozedur ein- oder mehrmals. Anderenfalls erfolgt eine Zeitkanalumsetzung der einzelnen Summenwerte, bei denen es sich dann um Endsummenwerte handelt, in die Zeitlage desjenigen Zeitkanals, der dem Konferenzteilnehmer zugeordnet ist, dessen Konferenzanteil die Summe nicht enthält.

Ein Leistungsmerkmal moderner digitaler Vermittlungsanlagen ist auch die Möglichkeit der Einblendung von Tonsignalen an einen der Teilnehmer einer Zweierverbindung.

Es ist schon bekannt, im Zusammenhang mit der Einspeisung von Hörtonsignalen in Konferenzverbindungen die Konferenzeinheit einer Vermittlungsstelle auszunutzen (EP-A-00 33 933). Die von einem Tongenerator gelieferten Tonsignalproben werden dabei in derselben Weise wie das Einzelsignal eines Konferenzteilnehmers behandelt, wobei auch hier die Bearbeitung seriell erfolgt. Allerdings wird in diesem Zusammenhang anders als bei der vorerwähnten bekannten Vermittlungsstelle der Sprachspeicher zu Konferenzsummen/Hörtonsummenbildung nicht mitausgenutzt.

Es ist außerderm eine Vermittlungsstelle bekannt (DE-A-32 46 051), bei der auch für die Toneinblendung in Zweierverbindungen eine Konferenzeinheit mitausgenutzt wird. Auch bei der hier bekannten Vermittlungsstelle erfolgt die Konferenzsummenbildung seriell. Die Behandlung der Tonsignale erfolgt hier insofern nicht in derselben Weise wie diejenige der Konferenzteilnehmereinzelsignale, als die Tonsignale nicht über das Koppelfeld einer Vermittlungsstelle der Konferenzeinheit zugeführt werden, sondern direkt an diese gelangen.

Die Aufgabe der Erfindung besteht nun darin, das Leistungsmerkmal der Toneinblendung in Zweierverbindungen in einer Fernmeldevermittlungsstelle der im Oberbegriff des Patentanspruchs 1 angegegebenen Art unter Zugrundelegung eines Parallelverarbeitungsbetriebs der Konferenzeinheit, der auch der Abwicklung von Konferenzverbindungen unabhängig von einer Tonsignaleinblendung zugutekommt, auf schaltungstechnisch günstige Art und Weise zu realisieren.

Diese Aufgabe wird durch die im Kennzeichen des Patentanspruchs 1 angegebenen Mittel gelöst.

Aufgrund der erfindungsgemäßen Idee erfordert eine ein Addiernetzwerk aus einer Mehrzahl von jeweils zwei Eingangssignalen verarbeitenden Addierern lediglich eine Ergänzung um ein weiteres solches Addiernetzwerk und zwei eingangsseitige und ein ausgangsseitiges Zwischenregister, um die Aufgabe der Toneinblendung in Zweierverbindungen mitübernehmen zu können.

Nachstehend wird die Erfindung anhand eines Ausführungsbeispiels unter Bezugnahme auf eine Zeichnung näher erläutert.

In der Zeichnung zeigen:
Figur 1 die beisplielhafte Struktur einer digitalen Zeitmultiplex-Fernmeldevermittlungsstelle,
Figur 2 denjenigen Teil einer solchen Zeitmultiplex-Fernmeldevermittlungsstelle, in dem die Erfindung realisiert ist,
Figur 3 ein Ausführungsbeispiel der zur Toneinblendung ausgestatteten Konferenzeinheit dieser Vermittlungsstelle,
Figur 4 ein den Sprachspeicher und die Konferenzeinheit zeigendes Blockschaltbild zur Veranschaulichung der Zeitlagenumsetzung bei der erfindungsgemäß realisierten Toneinblendung.

Die Anschlußgruppen LTG1 bis LTGn bilden die Schnittstelle zwischen der analogen oder digitalen Umgebung der Vermittlungsstelle und dem Koppelnetz. An sie sind demnach mit Teilnehmern verbindende Teilnehmerleitungen und/oder mit anderen Vermittlungsstellen verbindende Verbindungsleitungen PCMe0 bis PCMe11 angeschlossen.

Die Anschlußgruppen enthalten als wesentliche Bestandteile, wie bei der Anschlußgruppe LTG1 im einzelnen gezeigt, Anschlußeinheiten LTU1 bis LTUx, die ihrerseits die hier nicht dargestellten Teilnehmersätze oder Leitungssätze enthalten, ferner seinen Gruppenkoppler GS, eine Schnittstelleneinheit LIU, die die Schnittstelle zwischen der Anschlußgruppe und dem Koppelfeld darstellt, eine Signaleinheit SU, sowie einen Gruppenprozessor GP, der die genannten Einheiten steuert und darüber hinaus über die Teilnehmer- oder Verbindungsleitungen empfangene Wählinformationen verarbeitet und im Zusammenhang mit dem Aufbau und der Auslösung von Verbindungen mit dem Koordinatenprozessor CP in Steuerzeichenaustausch steht. Außerdem führt der Gruppenprozessor GP Routineprüfungen durch und übernimmt Überwachungsaufgaben.

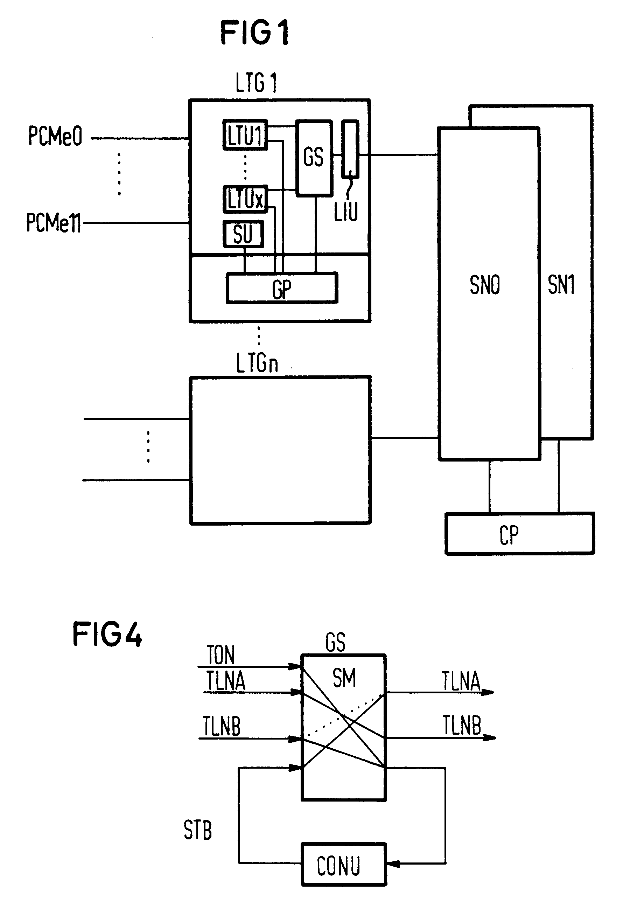

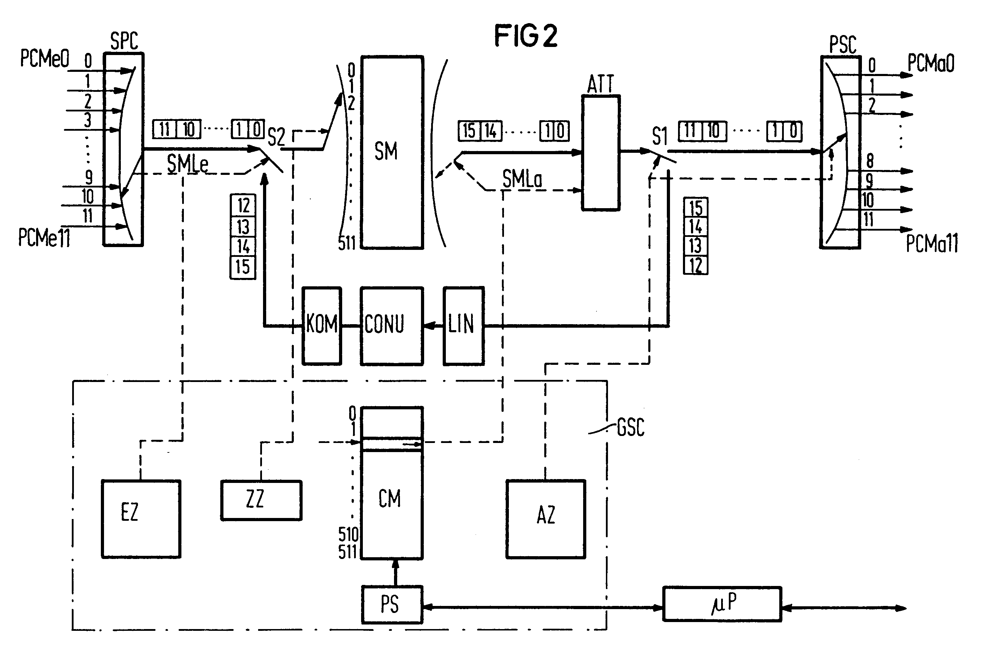

In Figur 2 ist eine hier näher interessierender Teil der Anschlußgruppe LTG der Anordnung gemäß Figur 1 mehr ins Einzelne gehend dargestellt.

Es ist der Anschluß von 12 PCM-Leitungen vorausgesetzt, auf denen jeweils 32 Zeitkanäle gebildet sind. Die Zweige für ankommende Übertragungsrichtung PCMe0 bis PCMe11 dieser PCM Leitungen sind an einen Serien-Parallel-Wandler SPC angeschlossen, der außerdem als Multiplexer wirkt, durch den die einzelnen Bits der auf den PCM-Leitungen ankommenden PCM-Wote nach einer Serien-Parallel-Wandlung unter der Voraussetzung von jeweils 8 Bit pro PCM-Wort auf die 8 Adern des Empfangszweigs SMLe einer mehradrigen Supermultiplexleitung verteilt werden und die durch Multiplexbildung auf dieser Multiplexleitung zeitlich derart verschachtelt werden, daß zunächst nacheinander die auf den PCM-Leitungen PCMe0 bis PCMe11 im Zeitkanal 0 übertragenen PCM-Worte nacheinander auftreten, dann nacheinander die im Zeitkanal 1 übertragenen usw. und schließlich die im Zeitkanal 32 übertragenen PCM-Worte.

Die Ablaufsteuerung des erwähnten Multiplexers arbeitet jedoch mit einem derart hohen Auslesetakt, daß außer den 12 x 32 = 384 Zeitfächern für die PCM-worte der 12 PCM-Leitungen, die hier als Übertragungszeitfächer bezeichnet werden, zusätzliche Zeitfächer gebildet werden, hier als Konferenzzeitfächer bezeichnet. Entsprechend einer angenommenen Maximalzahl von 4 Konferenzteilnehmern pro Konferenz und 32 gleichzeitig möglichen Konferenzen sind dies 4 x 32 zusätzliche Zeitfächer, die 32 Gruppen von jeweils 4 nacheinander auftretenden Zeitfächern bilden.

Der erwähnte Empfangszweig SMLe der Supermultiplexleitung führt zu einem Sprachspeicher SM, der zusammen mit der entsprechenden Ansteuerung den Gruppenkoppler GS gemäß Figur 1 bildet.

Der Sprachspeicher SM weist entsprechend der auf der Supermultiplexleitung gebildeten 384 Übertragungszeitfächer 384 Speicherzellen für jeweils 1 PCM-Wort auf. Zusätzlich, entsprechend den erwähnten zusätzlichen Konferenzzeitfächern, weist er 128 weitere Speicherzellen für jeweils 1 PCM-Wort auf, die 32 jeweils einer Konferenz zugeordnete Gruppen mit jeweils 4 Speicherzellen für 4 an einer Konferenz beteiligbare Konferenzteilnehmer bilden. Das Einschreiben in den Sprachspeicher SM von dem ankommenden Zweig SMLe der Supermultiplexleitung aus erfolgt zyklisch, das Auslesen auf den abgehenden Zweig SMLa der Supermultiplexleitung dagegen wahlfrei. Auf diesem abgehenden Zweig SMLa der Supermultiplexleitung herrschen entsprechende Verhältnisse wie auf dem ankommenden Zweig SMLe.

Die Figur 2 zeigt ferner eine Konferenzeinheit CONU, die in einer Rückführungsschleife liegt, über die bei entsprechender Schaltstellung von Umschaltern S1 und S2 der Ausgang des Sprachspeichers mit dessen Eingang verbunden ist. Eingangs der Konferenzeinheit CONU ist eine Einrichtung LIN zur Umwandlung von nichtlinearer Codedarstellung in lineare Codedarstellung angeordnet, ausgangsseitig der Konferenzeinheit eine Einrichtung KOM,die der entgegengesetzten Umwandlung von linearer Codedarstellung in nichtlinearer Codedarstellung dient.

Die dargestellte Anordnung steht unter dem Steuereinfluß einer Steuerung GSC, deren zentraler Teil ein Haltespeicher CM ist, der die Ansteueradressen für das wahlfreie Auslesen des Sprachspeichers SM liefert. Dieser Sprachspeicher enthält demnach eine gleiche Anzahl von Speicherzellen wie der Sprachspeicher SM, von denen diejenigen, die die Ansteueradressen für mit der Konferenz zusammenhängende Speicherzellen im Sprachspeicher aufnehmen, in entsprechender Zuordnung gruppiert sind, nämlich 32 Viere rgruppen entsprechend 32 gleichzeitig möglichen Konferenzen mit jeweils vier Speicherzellen entsprechend vier Konferenzteilnehmern pro Konferenz enthalten. Weitere Bestandteile der Steuerung GSC sind eine Prozessorschnittstelle PS zu einem Mikroprozessor μP, ein Zähler ZZ, der Ansteueradressen für die 512 Speicherzellen des Sprachspeichers SM beim zyklischen Einschreiben liefert, ferner ein Eingabezeitlagenzähler EZ, der die Übertragungszeitfächer auf der Supermultiplexleitung für ankommende Übertragungsrichtung SMLe zählt und nach deren Verstreichen jeweils den Umschalter S2 betätigt. Schließlich ist ein Ausgabezeitlagenzähler AZ vorgesehen, der in entsprechender Weise die Übertragungszeitfächer auf der Supermultiplexleitung für abgehende Übertragungsrichtung SMLa zählt und ein Steuersignal für den Umschalter S1 liefert.

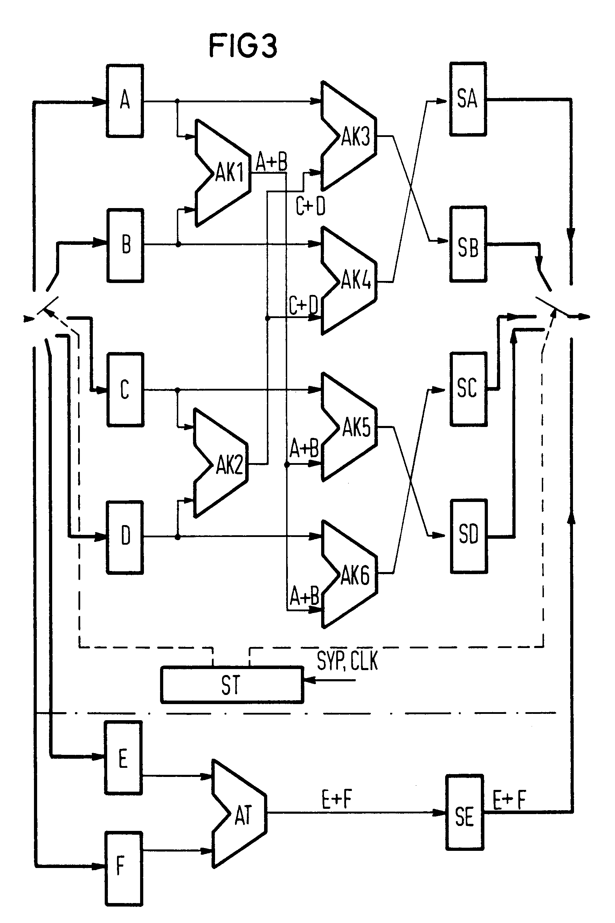

Die Figur 3 zeigt eine schon vorgeschlagene Lösung für den Aufbau der Konferenzeinheit (CONU), wobei vorausgesetzt ist, daß maximal vier Konferenzteilnehmer an einer Konferenz teilnehmen können. Es wird in diesem Zusammenhang zunächst der oberhalb der strichpunktierten Linie gezeigte Teil der Figur 3 betrachtet.

Die Konferenzeinheit gemäß Figur 3 weist demnach vier Zwischenregister A, B, C und D auf, in die die von den Konferenzteilnehmern stammenden Einzelsignale, die mittels des Sprachspeichers auf die entsprechenden Konferenzzeitfächer umgesetzt worden sind, zwischengespeichert werden.

Die erfindungsgemäße Konferenzeinheit weist ferner ein Addiernetzwerk auf, das aus Addierern AK1 bis AK6 besteht, die in zwei Stufen angeordnet sind, von denen die erste Stufe die Addierer AK1 und AK2 und die zweite Stufe die Addierer AK3 bis AK6 umfaßt. Der Addierer AK1 ist an die Ausgänge der Zwischenregister A und B angeschlossen und bildet demnach aus den Einzelsignalen der Teilnehmer A und B die Teilsumme A + B. Der Addierer AK2 ist an die Zwischenregister C und D angeschlossen und bildet dementsprechend die Teilsumme C + D aus den Einzelsignalen der Konferenzteilnehmer C und D.

Dem Addierer AK3 des Addiernetzwerkes wird ebenfalls ein Einzelsignal, nämlich der Inhalt des Registers A, sowie das vom Addierer AK2 abgegebene Teilsummensignal C + D zugeführt. Er liefert also ein Endsummensignal SB = A + C + D, das in einem ausgangsseitigen Zwischenregister SB zwischengespeichert wird. In entsprechender Weise erhält der Addierer AK4 aus dem Zwischenregister B ein vom Konferenzteilnehmer B geliefertes Einzelsignal sowie das mit Hilfe des Addierers AK2 gebildete Teilsummensignal C + D, woraus er die Endsumme SA = B + C + D bildet, die im ausgangsseitigen Zwischenregister SA zwischengespeichert wird. Der Inhalt des Zwischenregisters C wird zusammen mit dem vom Addierer AK1 abgegebenen Teilsummensignal A + B dem Addierer AK5 zur Bildung des Endsummensignals SD = A + B + C zugeführt, das im ausgangsseitigen Zwischenregister SD zwischengespeichert wird. Schließlich dient der Addierer AK6 dazu, aus dem Inhalt des Zwischenregisters D und dem vom Addierer AK1 abgegebenen Teilsummensignal A + B das Endsummensignal SC = A + B + D zu bilden, das im ausgangsseitigen Zwischenregister SC zwischengespeichert wird. Bei einer größeren Anzahl von maximal beteiligbaren Konferenzteilnehmern weist das Addiernetzwerk eine weitere Stufe aus Addierern auf, denen dann nur Teilsummensignale als Eingangsgrößen zugeführt werden.

Unter dem Steuereinfluß einer Steuerung St, die auch die zeitgerechte Eingabe in die erwähnten eingangsseitigen Zwischenregister A bis D bewirkt, werden die Inhalte der ausgangsseitigen Zwischenregister SA bis SD während entsprechender Konferenzzeitlagen ausgelesen.

Im Hinblick auf die Ausnutzung der Konferenzeinheit CONU zur Toneinblendung ist die Konferenzeinheit CONU, durch die in Figur 3 unterhalb der strichpunktierten Linie gezeigten Bestandteile erweitert. Es handelt sich dabei um zwei weitere eingangsseitige Zwischenregister E und F, um einen weiteren Addierer AT, der die in diesen Zwischenregistern enthaltenen Signale zu einem Tonsummensignal E + F verarbeitet, sowie um ein ausgangsseitiges Zwischenregister SE, das dieses Tonsummensignal aufnimmt.

Im Hinblick auf die Toneinblendung sind ferner auf den Supermultiplexleitungen SMLe und SMLa weitere zusätzliche Zeitfächer gebildet, die im folgenden als Tonsignalzeitfächer bezeichnet werden. Entsprechend erweitert sind auch der Sprachspeicher SM und dessen Haltespeicher um diesen Tonsignalzeitfächern zugeordnete zusätzliche Speicherzellen.

Die genannten Erweiterungen entsprechen den Erweiterungen, die erforderlich wären, wenn statt der angenommenen maximal 4 Konferenzteilnehmern je Konferenz die Teilnahme von maximal 6 Konferenz teilnehmern möglich wäre. In diesem Falle lassen sich 32 verschiedene Töne in Zweierverbindungen einblenden.

Nachstehend wird zunächst auf die Vorgänge bei der Abwicklung einer normalen Zweierverbindung eingegangen. Es sei angenommen, daß eine Verbindung zwischen einem Teilnehmer A und einem Teilnehmer B bestehen soll, die in ihnen zugeordneten Zeitfächern auf den ankommenden Zweigen PCMe der Zeitmultiplexleitungen bzw. in den entsprechenden Übertragungszeitfächern auf der Supermultiplexleitung für ankommende Übertragungsrichtung SMLe PCM-Worte an den Sprachspeicher SM liefern, in dem diese im Zuge des zyklischen Einschreibens in diesen Zeitfächern zugeordneten Speicherzellen abgelegt werden. Durch wahlfreies Auslesen gelangen die vom Teilnehmer A stammenden PCM-Worte in die auf der Supermultiplexleitung für abgehende Übertragungsrichtung SMLa dem Teilnehmer B zugeordneten Übertragungszeitfächer, wogegen umgekehrt die vom Teilnehmer B stammenden PCM-Worte in die dem Teilnehmer A auf dieser Multiplexleitung SMLa zugeordneten Übertragungszeitfächer gelangen. Die Konferenzeinheit hat in diesem Zusammenhang keine Funktion.

Nachfolgend wird auf die Vorgänge bei der Abwicklung einer Konferenz näher eingegangen, wobei angenommen wird, daß vier Konferenzteilnehmern A, B, C und D beteiligt sind. Diese Konferenzteilnehmer liefern Einzelsignale in Form entsprechender PCM-Worte in ihnen auf den ankommenden Zweigen PCMe der Zeitmultiplexleitungen bzw. in den auf entsprechenden Übertragungszeitfächern auf der Supermultiplexleitung SMLe für ankommende Übertragungsrichtung an den Sprachspeicher SM, in dem sie, wie oben angegeben, durch zyklisches Einschreiben in den Übertragungszeitfächern zugeordneten Speicherzellen abgelegt werden. Beim wahlfreien Auslesen der betreffenden Speicherzellen erfolgt nunmehr aber im Gegensatz zu den Verhältnissen bei der oben erläuterten Zweierverbindung, eine Umsetzung in auf der Supermultiplexleitung SMLa gebildete unmittelbar aufeinanderfolgende Konferenzzeitfächer einer der betreffenden Konferenz zugeordneten Gruppe von Konferenzzeitfächern. Über den Schalter S2, der, gesteuert durch den Zähler AZ während dieser Zeitspannen die dargestellte Schaltstellung einnimmt und über die Einrichtung LIN, die eine Linearisierung vornimmt, gelangen sie an die Konferenzeinheit CONU.

Dort werden vier Endsummensignale gebildet, die jeweils das Einzelsignal desjenigen Konferenzteilnehmers, für den sie bestimmt sind, nicht enthalten. Diese Endsummensignale gelangen nach einer Zwischenspeicherung in den Zwischenspeichern SA, SB, SC und SD und nach einer Codewandlung von linearer Codierung in nichtlineare Codierung durch die Einrichtung KOM in entsprechenden aufeinanderfolgenden Konferenzzeitfächern über den Schalter S2, an den Eingang des Sprachspeichers SM, wo sie im Zuge des zyklischen Einschreibens in den erwähnten Konferenzzeitfächern zugeordneten Speicherzellen abgelegt werden. Durch wahlfreie Ansteuerung dieser Speicherzellen erfolgt dann eine Umsetzung auf die den erwähnten Konferenzteilnehmern A, B, C und D zugeordnete auf der Supermultiplexleitung für abgehende Übertragungsrichtung SMLa gebildete Übertragungszeitfächer, von wo aus sie über den nunmehr umgeschalteten Schalter S1 an den Parallel-Serienwandler PSC und von da aus an die betreffende oder die betreffenden abgehenden Zweige PCMa0 bis PCa11 der Zeitmultiplexleitungen gelangen.

Unter zusätzlicher Bezugnahme auf die Figur 4 werden nunmehr die Vorgänge bei einer erfindungsgemäß durchgeführten Toneinblendung in einer Zweierverbindung näher erläutert.

Soll bei einer solchen Zweierverbindung zwischen einem Teilnehmer A und einem Teilnehmer B ein für den Teilnehmer A bestimmter Ton eingeblendet werden, dann werden, wie die Figur 4 zeigt, die vom Teilnehmer A kommenden Sprachsignalproben wie bei einer normalen Zweierverbindung behandelt, also durch den Sprachspeicher SM GS vom Zeitfach des dem Teilnehmer A zugeordneten Zeitkanals auf das Zeitfach des dem Teilnehmer B zugeordneten Zeitfachs umgesetzt. Die vom Teilnehmer B kommenden Sprachsignalproben und die Tonsignalproben werden dagegen entsprechenden Einzelsignalen der Konferenzteilnehmer einer Konferenzverbindung behandelt, d.h. von den jeweiligen Übertragungszeitfächern in zwei aufeinanderfolgende der zusätzlichen Tonsignalzeitfächer umgesetzt, und der Konferenzeinheit CONU zugeführt, wo sie in die eingangsseitigen Zwischenregister E bzw. F gelangen. Die Konferenzeinheit bildet daraufhin mit Hilfe des zusätzlichen Addierers AT ein Summensignal E + F, das zunächst in das ausgangsseitige Zwischenregister SE gelangt und von da aus in dem betreffenden Tonsignalzeitfach über die Supermultiplexleitung SMLe erneut dem Sprachspeicher SM zugeführt, und beim zyklischen Einschreiben in dessen für solche Tonsignal/Sprachprobengemische vorgesehenen zusätzlichen Speicherzellen abgelegt wird. Danach erfolgt beim wahlfreien Auslesen eine Zeitkanalumsetzung in das Zeitfach des dem Teilnehmer A auf der Supermultiplexleitung SMLa zugeordneten Zeitkanals, um diesem Teilnehmer der Zweierverbindung zugeführt zu werden.

**Patentansprüche**

1. Digitale Zeitmultiplex-Fernmeldevermittlungsstelle mit einer Konferenzeinheit (CONV), die in einer den Ausgang des zyklisch einschreibbaren und wahlfrei auslesbaren Sprachspeichers (SM) der Koppelanordnung, vorzugsweise Gruppenkoppelanordnung der Vermittlungsstelle mit dessen Eingang verbindenden Rückführungsschleife liegt, ferner mit auf den eingangsseitig und ausgangsseitig an den Sprachspeicher angeschlossenen Supermultiplexleitungen (SLMa, SLMe) für Parallelübertragungen von PCM-Worten über die Anzahl der Übertragungszeitfächer hinaus, in denen Informationsübertragungen von und zu der Vermittlungsstelle stattfinden, zusätzlich gebildeten, unmittelbar aufeinanderfolgenden Konferenzzeitfächern, die eine der Anzahl von gleichzeitig möglichen Konferenzen gleiche Anzahl, jeweils so viele Zeitfächer wie Konferenzteilnehmer pro Konferenz möglich sind, umfassende Anzahl von Gruppen bilden, sowie mit im Sprachspeicher und seinem zugehörigen Haltespeicher zusätzlich zu den im Zuge einer Vermittlung von Zweierverbindungen erforderlichen Sprachspeicher-bzw. Haltespeicherzellen enthaltenen, den genannten Konferenzzeitfächern zugeordneten Speicherzellen, bei der im Zuge der Herstellung einer Konferenzverbindung die Konferenzeinheit durch wahlfreies Auslesen aus dem Sprachspeicher in Konferenzzeitfächer umgesetzte Einzelsignale der Konferenzteilnehmer empfängt und aus diesen gebildete konferenzteilnehmerindividuelle Summensignale, die jeweils den Eigenanteil des Teilnehmers nicht enthalten, in entsprechenden Konferenzzeitfächern auf die eingangsseitige Supermultiplexleitung liefert, von wo aus sie beim zyklischen Einschreiben in die zugeordneten zusätzlichen Sprachspeicherzellen gelangen, und bei der nach wahlfreiem Auslesen diese Summensignale in den den Konferenzteilnehmern zugeordneten Übertragungszeitfächern auf der ausgangsseitigen Multiplexleitung weiter übertragen werden, **gekennzeichnet**

durch folgende Merkmale:

a) auf den eingangsseitig und ausgangsseitig an den Sprachspeicher angeschlossenen Supermultiplexleitungen (SMLe, SMLa) sind weitere zusätzliche Zeitfächer, sogenannte Tonsignalzeitfächer, gebildet, die einer Erweiterung der Maximalanzahl beteiligbarer Konferenzteilnehmer pro Konferenzverbindung entsprechen, jedoch im Zusammenhang mit der Einblendung von Tonsignalen an jeweils einen der Teilnehmer von Zweierverbindungen ausgenutzt werden,

b) der Sprachspeicher (SM) und sein zugehöriger Haltespeicher (CM) sind um den Tonsignalzeitfächern zugeordnete Speicherzellen erweitert,

c) im Zuge einer Toneinblendung an einen der Teilnehmer einer Zweierverbindung werden die von dem Teilnehmer, der von der Toneinblendung nicht betroffen sein soll, kommenden Sprachsignalproben, sowie die Tonsignalproben eines einzublendenden Tonsignals wie die Einzelsignale von Konferenzteilnehmern jedoch unter Ausnutzung der genannten Tonsignalzeitfächer behandelt, um schließlich dem Teilnehmer, für den das Tonsignal bestimmt ist, in einem zugeordneten Übertragungszeitfach als Summensignal zugeführt zu werden,

d) die Konferenzeinheit (CONU) weist ein Addiernetzwerk auf, das aus Addierern (AK1 bis AK6) besteht, die jeweils zwei Eingangssignale zu einem Summensignal verarbeiten, und in wenigstens zwei Stufen angeordnet sind, wobei es sich bei den durch die Addierer (AK1, AK2) der ersten Stufe zu verarbeitenden Eingangssignalen um aus Zwischenregistern (A bis D) aufgenommene, von den Konferenzteilnehmern gelieferte Einzelsignale und bei den von den Addierern (AK3 bis AK6) verarbeiteten Eingangssignalen es sich um jeweils ein solches Eingangssignal und jeweils ein von einem Addierer (AK1, AK2) der vorhergehenden Stufe geliefertes Teilsummensignal oder um zwei solcher Teilsummensignael handelt,

e) das Addiernetzwerk bildet eine der Zahl der maximal an einer Konferenz beteiligbaren Konferenzteilnehmer gleiche Anzahl von Konfernzsummensignalausgängen, denen jeweils ein Register (SA bis SD) nachgeschaltet ist, das jeweils während einem bestimmten der Konferenzzeitfächer innerhalb der Gruppe von Konferenzzeitfächern ausgelesen wird,

f) das Addiernetzwerk ist durch einen weiteren Addierer (AT) ergänzt, dessen beiden Eingängen jeweils über ein weiteres Zwischenregister (e, f) Tonsignalproben eines in eine Zweierverbindung einzublendenden Tonsignals sowie die Sprachsignalproben desjenigen Teilnehmers der Zweierverbindung, der von der Toneinblendung nicht betroffen sein soll, zugeführt werden und dessen Ausgang einen weiteren Ausgang der Konferenzeinheit (CONU) bildet, dem ein weiteres Register (SE) angeschaltet ist, von dem aus die darin befindlichen Summensignale wie Konferenzsummensignale dem Sprachspeicher (SM) zugeführt werden und von dort aus in einem entsprechenden Übertragungszeitfach dem Teilnehmer der Zweierverbindung zugeführt werden, für den das Tonsignal bestimmt ist.

## Claims

1. A digital time-division multiplex telecommunication exchange with a conference unit (CONV) which is located in a feedback loop connecting the output of the cyclically loadable and optionally readable voice memory (SM) of the switching arrangement, preferably group switching arrangement of the exchange with its input, furthermore with super multiplex lines (SLMa, SLMe), connected to the voice memory at the input and at the output end, for parallel transmissions of PCM words beyond the number of transmission time cells in which information transmissions take place from and to the exchange, additionally formed immediately successive conference time cells which form a number of groups comprising a number equal to the number of simultaneously possible conferences, in each case as many time cells as conference partners are possible for each conference, and with memory cells allocated to the said conference time cells contained in the voice memory and its associated latching memory in addition to the voice memory or latching memory cells required during the switching of two-party connections, in which the conference unit, during the establishment of a conference connection, receives individual signals of the conference partners, converted into conference time cells by optional reading out of the voice memory, and supplies conference-partner-individual sum signals, formed from these, which in each case do not contain the cell-component of the partner, in corresponding conference time cells to the super multiplex line at the input end from where they pass into the associated additional voice memory cells during the cyclic loading and are transmitted further on the multiplex line on the output end in the transmission time cells allocated to the conference partners after optional reading out of these sum signals, characterized by the following features:

a) on the super multiplex lines (SLMe, SMLa) connected to the voice memory at the input end and output end, further additional time cells, so-called sound signal time cells, are formed which correspond to an extending of the maximum number of involvable conference partners per conference connection but are used in conjunction with the insertion of sound signals to in each case one of the partners of two-party connections,

b) the voice memory (SM) and its associated latching memory (CM) are extended by memory cells allocated to the sound signal time cells,

c) during a sound insertion to one of the partners in a two-party connection, the voice signal samples coming from the partner which is not to be affected by the sound insertion, and the sound signal samples of a sound signal to be inserted, are treated like the individual signals of conference partners but utilizing the said sound signal time cells in order to be finally supplied as sum signal in an associated transmission time cell to the partner for which the sound signal is intended,

d) the conference unit (CNOU) exhibits an adding network which consists of adders (AK1 to AK6) which in each case process two input signals to form a sum signal, and are arranged in at least two stages, the input signals to be processed by the adders (AK1, AK2) of the first stage being individual signals supplied by the conference partners and received from buffer registers (A to D) and the input signals processed by the adders (AK3 to AK6) being in each case one such input signal and in each case a part-sum signal supplied by an adder (AK1, AK2) of the preceding stage or two such part-sum signals,

e) the adding network forms a number of conference sum signal outputs equal to the number of conference partners which can be maximally involved in a conference, which outputs are in each case followed by a register (SA to SD) which is in each case read out during a particular one of the conference time cells within the group of conference time cells,

f) the adding network is supplemented by a further adder (AT), the two inputs of which are in each case supplied via a further buffer register (e, f) with sound signal samples of a sound signal to be inserted into a two-party connection and with voice signal samples of the partner in the two-party connection which is not to be affected by the sound insertion, and the output of which forms a further output of the conference unit (CNOU) which is followed by a further register (SE) from which the sum signals located therein are supplied as conference sum signals to the voice memory (SM) and are supplied from there in a corresponding transmission time cell to the partner in the two-party connection for which the sound signal is intended.

**Revendications**

1. Central de télécommunication numérique à multiplexage temporel comportant une unité de conférence (CONV) qui est située dans une boucle de réaction, qui relie la sortie de la mémoire de signaux vocaux (SM), qui peut être enregistrée et lue à volonté cycliquement, du dispositif de couplage, de préférence du dispositif de couplage de groupe du central, à l'entrée de cette mémoire, et comportant, en outre, des lignes de super-multiplexage (SLMa, SLMe) qui sont raccordées, côté entrée et côté sortie, à la mémoire de signaux vocaux et sont utilisées pour des transmissions en parallèle de mots MIC par des créneaux temporels de conférence qui se succèdent directement, qui sont formés en plus du nombre des créneaux temporels de transmission, dans lesquels sont exécutées des transmission d'informations en provenance et en direction du central, et qui forment un nombre de groupes, qui comportent un nombre de créneaux temporels, qui est identique au nombre de conférences possibles simultanément, à savoir respectivement autant de créneaux temporels qu'il est possible d'avoir de participants à chaque conférence, et comportant des cellules de mémoire, qui sont contenues dans la mémoire de signaux vocaux et dans la mémoire de retenue associée en plus des mémoires de signaux vocaux ou des cellules de mémoire de retenue, qui sont nécessaires au cours d'une commutation de liaisons doubles, et associées auxdits créneaux temporels de conférence, et dans lequel au cours de l'établissement d'une liaison de conférence, l'unité de conférence reçoit des signaux individuels des participants à la conférence, qui sont convertis au moyen d'une lecture au choix à partir de la mémoire de signaux vocaux en des créneaux temporels de conférence, et délivre des signaux de sommes, formés à partir desdits signaux individuels et prévus individuellement pour chaque participant à la conférence et qui ne contiennent pas respectivement la composante particulière de l'abonné, pendant des créneaux temporels de conférence correspondants dans la ligne de super-multiplexage située côté entrée, d'où ils parviennent, lors de l'enregistrement cyclique, dans les cellules supplémentaires associées de mémoire de signaux vocaux, et dans lequel après la lecture réalisée à volonté, ces signaux de sommes sont retransmis à la ligne de multiplexage située côté sortie, dans les créneaux temporels de transmission associés aux participants à la conférence, caractérisé par les particularités suivantes :

a) dans des lignes de super-multiplexage (SMLe, SMLa), qui sont raccordées côté entrée et côté sortie à la mémoire de signaux vocaux, sont formés d'autres créneaux temporels supplémentaires, ce qu'on appelle des créneaux temporels de signaux de tonalité, qui correspondent à une extension du nombre maximum de participants éventuels à la conférence pour chaque liaison de conférence, mais sont utilisés en liaison avec l'insertion de signaux de tonalité chez respectivement l'un des abonnés de liaisons doubles,

b) la mémoire de signaux vocaux (SM) et la mémoire de retenue (CM), qui lui est associée, sont augmentées de cellules de mémoire associées aux créneaux temporels de transmission des signaux de tonalité,

c) au cours d'une injection de signaux de tonalité chez l'un des abonnés participant à une liaison double, les échantillons de signaux vocaux, qui proviennent de l'abonné qui ne doit pas être concerné par l'injection de signaux de tonalité, ainsi que les échantillons d'un signal de tonalité devant être injectés de même que les signaux individuels de participants à la conférence sont cependant traités moyennant l'utilisation desdits créneaux temporels de transmission de signaux de tonalité, de manière à être finalement envoyés en tant que signal somme, dans un créneau temporel associé de transmission, à l'abonné auquel est destiné le signal de tonalité,

d) l'unité de conférence (CONU) possède un réseau additionneur qui est constitué par des additionneurs (AK1 à AK6), qui traitent respectivement deux signaux d'entrée pour former un signal somme et qui sont disposés dans au moins deux étages, les signaux d'entrée devant être traités par les additionneurs (AK1, AK2) du premier étage étant des signaux individuels reçus par des registres intermédiaires (A à D) et délivrés par les participants à la conférence, tandis que les signaux d'entrée traités par les additionneurs (AK3 à AK6) sont respectivement un tel signal d'entrée et respectivement un signal de somme partielle, délivrés par un additionneur (AK1, AK2) de l'étage précédent, ou deux tels signaux de sommes partielles,

e) deux réseaux additionneurs forment un nombre, qui est égal au nombre maximum des personnes susceptibles de participer à une conférence, de sorties de signaux de sommes de conférence, en aval desquelles est branché respectivement un registre (SA à SD), qui est lu respectivement pendant l'un déterminé des créneaux temporels de conférence à l'intérieur du groupe de créneaux temporels de conférence,

f) le réseau additionneur est complété par un autre additionneur (AT), aux deux entrées duquel des échantillons d'un signal de tonalité, qui doit être injecté dans une liaison double, ainsi que les échantillons de signaux vocaux de l'abonné de la liaison double, qui ne doit pas être concerné par l'injection du signal de tonalité, et dont la sortie forme une autre sortie de l'unité de conférence (CONU), à laquelle est raccordé un autre registre (SE), à partir duquel les signaux de sommes situés dans ce registre sont envoyés ainsi que des signaux de sommes de conférence à la mémoire de signaux vocaux (SM) et, à partir de là, sont envoyés, dans un créneau temporel de transmission correspondant, à l'abonné de la liaison double, auquel le signal de tonalité est destiné.

# FIG 1

LTG 1

PCMe0

PCMe11

LTU1

LTUx

SU

GS

LIU

GP

LTGn

SN0

SN1

CP

# FIG 4

GS

TON

TLNA

TLNB

SM

TLNA

TLNB

STB

CONU

FIG 2

# FIG3